# EUROPÄISCHE PATENTANMELDUNG

(11) **EP 1 362 786 A2**
(43) Veröffentlichungstag der Anmeldung: **19.11.2003**
(21) Anmeldenummer: 03010527.4
(22) Anmeldetag: 10.05.2003
(51) Int. Cl.: B64G 1/50

(54) **Radiator für einen Satelliten**

(30) Priorität: 18.05.2002 DE 10222180
(71) Anmelder: Astrium GmbH, 81663 München (DE)
(72) Erfinder: Faust, Thomas, 88090 Immenstaad (DE); Downar, Hartmut, Dr., 88690 Uhldingen-Mühlhofen (DE)
(74) Vertreter: Ulrich, Thomas

(57) **Zusammenfassung**

Die Erfindung betrifft einen Radiator (R) für einen Satelliten (SAT), wobei auf der Radiatoroberfläche ein wellenlängenselektives Element (OS) aufgebracht ist, das folgende Eigenschaften besitzt:
- einen hohen hemisphärischen Emissionsgrad für IR-Strahlung;
- einen geringen Absorptionsgrad für IR-Strahlung eines schwarzen Strahlers mit einer Temperatur zwischen 500 und 700 K;
- einen geringen solaren Absorptionsgrad.

## Beschreibung

Die Erfindung betrifft einen Radiator für einen Satelliten.

Radiatoren werden in der Raumfahrt genutzt, um in Raumfahrzeugen anfallende Verlustwärme an eine kalte Umgebung abzustrahlen, um damit die interne Temperatur zu regulieren. Angepasste Oberflächeneigenschaften sorgen dafür, dass die internen Lasten so gut wie möglich als IR-Strahlung an die Umgebung abgegeben werden können. Die externen Lasten (hauptsächlich Sonnenstrahlung sowie Albedound IR Strahlung vom umrundeten Planeten) sollen hingegen so wenig wie möglich absorbiert werden. Standardmäßig werden bei Satelliten im Erdorbit Oberflächen mit einem hohen infraroten hemisphärischen Emissionsgrad (εₕ) und kleinen solaren Absorptionsgraden (αₛ) eingesetzt (z.B. weiße Farben, OSRs, SSM-Band). Diese minimieren somit nicht die absorbierte Erdstrahlung.

Neue Anforderungen ergeben sich bei sonnennahen Planetenmissionen, bei denen sich die externen Lasten aus einer etwa 10-fach höheren Sonnenstrahlung und 20-fach höheren Planetenstrahlung (verglichen mit erdnahen Umlaufbahnen) zusammensetzen. Solche Umgebungsbedingungen sind z.B. in einer Umlaufbahn um den Merkur gegeben. Aufgrund der für die Radiatorfunktion notwendigen hohen εₕ-Werte der Standardradiatoroberfläche würden extreme Wärmemengen in der Größenordnung von einigen kW/m² absorbiert werden und zu einer unzulässigen Erwärmung des Satelliten führen.

Der Erfindung liegt die Aufgabe zugrunde, einen Radiator für einen Satelliten zu entwickeln, der selbst bei einer etwa 10-fach höheren Sonnenstrahlung und 20-fach höheren Planetenstrahlung (verglichen mit erdnahen Umlaufbahnen), wie sie z.B. auf einer Umlaufbahn um den Merkur herrschen, moderate Temperaturen (-40 °C bis +60°C) im Inneren des Satelliten garantiert.

Diese Aufgabe wird mit dem Gegenstand des Patentanspruch 1 gelöst. Vorteilhafte Ausführungen sowie eine vorteilhafte Anwendung des erfindungsgemäßen Radiators sind Gegenstand weiterer Ansprüche.

Gemäß der Erfindung weist der Radiator auf seiner Oberfläche ein wellenlängenselektives Element auf, das folgende Eigenschaften besitzt:
- einen hohen hemisphärischen Emissionsgrad (εₕ bevorzugt > 0,8) zur Abstrahlung der Verlustwärme des Satelliten;
- einen geringen Absorptionsgrad (α_{IR} bevorzugt < 0,4) für IR-Strahlung eines schwarzen Strahlers bei Temperaturen zwischen 500 und 700 K zur Minimierung der absorbierten Wärmestrahlung des Planeten, in dessen Orbit sich der Satellit befindet und
- einen geringen solaren Absorptionsgrad (αₛ bevorzugt <0,2) zur Minimierung der absorbierten Wärmestrahlung der Sonne.

Als Material für das wellenlängenselektive Element eignet sich insbesondere ein Fluorid, z.B. CaF₂, LaF₃, CeF₃ oder auch Al₂O₃, wobei auf der Rückseite eine Reflexionsschicht, z.B. aus Silber oder Aluminium aufgebracht ist.

Die genannten Materialien liegen in dem wellenlängenselektive Material bevorzugt in Form dünner, insbesondere monokristalliner Plättchen mit einer Dicke von z.B. 0,1 bis 10 mm vor. Die Fläche dieser Plättchen kann je nach Material und Herstellungsverfahren zwischen einigen mm² und einigen cm² betragen, wobei eine prinzipielle Unter- oder Obergrenze nicht existiert. Die Verwendung dünner Plättchen ist besonders vorteilhaft, da durch sie unterschiedliche Wärmeausdehnungen des Radiatormaterials und des wellenlängenselektiven Materials kompensiert werden können, da zwischen den einzelnen Plättchen Abstände vorgesehen werden bzw. werden können, die wie Dehnungsfugen wirken. Diese Abstände können bevorzugt in der gleichen Größenordnung gewählt werden wie die Dicke der Plättchen. Dies wäre bei Verwendung einer durchgehenden Schicht eines wellenlängenselektiven Materials nicht der Fall. Außerdem ist die Verwendung einzelner Plättchen reparaturfreundlicher, da bei lokalen Defekten im Idealfall nur ein einziges Plättchen ausgewechselt werden muss und nicht eine ganze, durchgehende Schicht komplett erneuert werden muss. Auch kann das Aufbringen der Plättchen zeitlich getrennt von der Fertigung des Radiatorkörpers erfolgen, wodurch der Fertigungsprozess flexibler gestaltet werden kann. Die Plättchen können bevorzugt mit Hilfe eines Klebers, beispielsweise eines flexiblen Klebers, aufgebracht, der somit noch zusätzlich zur Kompensation der unterschiedlichen Wärmeausdehnungskoeffizienten von Radiatormaterial und wellenlängenselektivem Material beitragen kann. Insbesondere kann der Kleber auch elektrisch leitend ausgebildet sein.

Das erfindungsgemäße wellenlängenselektive Element weist eine - vom eingesetzten Material abhängige - Trennwellenlänge auf, unterhalb der die einfallende Strahlung im Wesentlichen reflektiert wird, und oberhalb der die einfallende Strahlung im Wesentlichen absorbiert wird. Für CaF₂ beträgt sie z.B. 9 µm. Das Vorhandensein dieser Trennwellenlänge führt zu den oben genannten Eigenschaften des Materials bezüglich des gewünschten Emissionsgrades und der gewünschten Absorptionsgrade.

Im Folgenden wird der erfindungsgemäße Radiator anhand einer Anwendung an Bord eines Satelliten auf einer Umlaufbahn um den Merkur beispielhaft beschrieben.

Das Grundprinzip des erfindungsgemäßen Radiators basiert auf den selektiven Strahlungseigenschaften des auf der Radiatoroberfläche angeordneten wellenlängenselektiven Elements (dieses wird im folgenden auch als optischer Splitter bezeichnet) für vom Merkur kommende IR-Strahlung einerseits und der IR-Eigenstrahlung des Satelliten andererseits. Die Absorption der vom Merkur kommenden IR-Strahlung wird minimiert, ohne dass die eigentliche Funktion des Radiators, der Abstrahlung von Wärme aus dem Innern des Satelliten, beeinträchtigt wird.

Außerdem weist das wellenlängenselektive Element einen geringen solaren Absorptionsgrad auf, so dass das Maß der absorbierten Sonnenstrahlung gering bleibt.

Durch geeignete Ausrichtung des Radiators zu Sonne und Merkur kann die Absorption von Sonnenstrahlung sogar insgesamt vermieden werden.

Das Funktionsprinzip des optischen Splitters gemäß der Erfindung ist nicht auf den Merkur beschränkt, sondern lässt sich auch auf andere Planetenmissionen mit hoher Planetenstrahlung (und hoher Eigentemperatur) übertragen. Zur Anpassung an die jeweiligen Strahlungszustände muss lediglich die Trennwellenlänge des optischen Elements geändert werden. Dies kann durch geeignete Materialauswahl erreicht werden.

Die Erfindung wird im folgenden anhand einer konkreten Anwendung und unter Bezugnahme auf Figuren näher beschrieben. Es zeigen:
- Fig. 1:: eine Skizze zur Darlegung der geometrischen Verhältnisse im Perigäum und Apogäum des Satellitenorbits um den Merkur;
- Fig. 2:: eine Skizze zur Darlegung der geometrischen Verhältnisse von Satellitenorbit und Merkurbahn um die Sonne;
- Fig. 3:: eine Skizze zu den einfallenden Wärmelasten auf Satellit und Radiator;
- Fig. 4a,b:: die aus Simulationsrechnungen abgeleiteten spektralen Absorptions- und Reflexionsgrade eines 1mm dicken Calciumfluoridplättchens mit rückseitiger Silberbedampfung in einem Frequenzbereich, der insbesondere den IR-Bereich betrifft;
- Fig. 5a,b:: die die aus Simulationsrechnungen abgeleiteten spektralen Absorptions-, und Reflexionsgrade eines 1 mm dicken Calciumfluoridplättchens mit rückseitiger Silberbedampfung in logarithmischer Darstellung;
- Fig. 6:: den Absorptionsgrad eines 1mm dicken Calciumfluorid-Plättchens mit rückseitiger Silberbedampfung als Funktion der Temperatur der einfallenden Strahlung eines schwarzen Körpers;
- Fig. 7:: eine erfindungsgemäße Ausführung aus einem Radiator mit darauf aufgebrachtem optischem Splitter in schematischer Darstellung, wobei auch die vorhandenen Wärmeströme und Strahlungswege eingezeichnet sind;
- Fig. 8:: die spektrale Strahldichte eines schwarzen Strahlers bei 310 K (Radiator), 700 K (Merkur) und 5777 K (Sonne) in Abhängigkeit von der Wellenlänge.
- Fig. 9:: die detailierte Darstellung einer erfindungsgemäßen Ausführung aus einem Radiator mit darauf angebrachtem optischem Splitter.

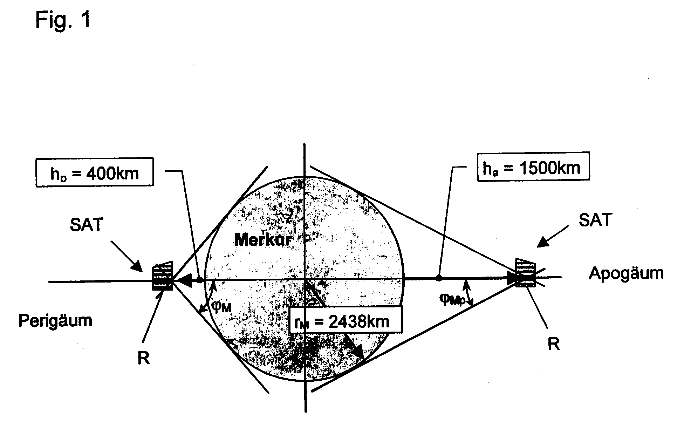

Fig. 1 zeigt eine Skizze zur Darlegung der geometrischen Verhältnisse des Satellitenorbits um den Merkur. Es wird von einer elliptischen Bahn um den Merkur ausgegangen, deren Bahnhöhe im Perigäum 400 km und im Apogäum 1500 km beträgt. Die Bahn steht senkrecht zur Papierebene. Eine Seite des den Merkur umkreisenden Satelliten SAT ist ständig nadirorientiert.

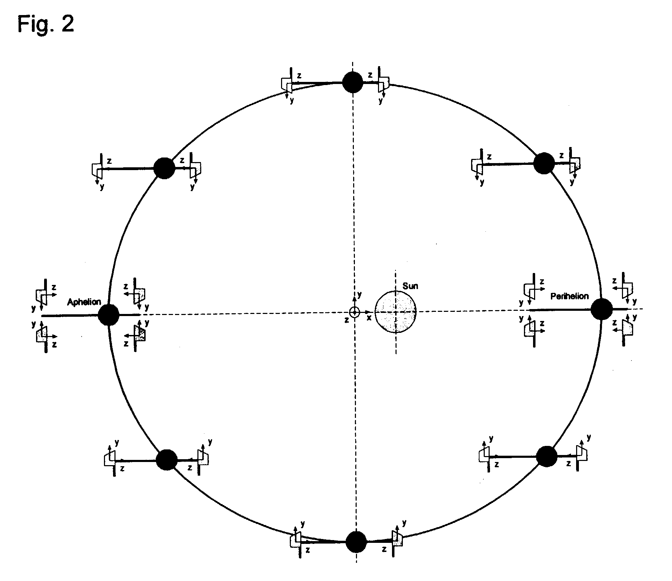

Direkte Sonneneinstrahlung auf die Radiatorebene wird vermieden, indem der Satellit in geeigneter Weise gedreht wird, sobald er an der Stelle des Orbits angelangt ist, an der der Sonnenvektor parallel zur Radiatorebene verläuft (siehe Fig. 2). Wie man aus Fig. 2 erkennt, erfolgt eine solche Drehung des Satelliten genau zweimal während eines Umlaufs des Merkurs um die Sonne. Die Bahnebene des Satelliten verläuft in Fig. 2 senkrecht zur Papierebene. Die Orientierung der Bahnebene des Satelliten ist raumfest über den gesamten Umlauf des Merkurs um die Sonne. Der Normalenvektor des Radiators steht in allen Punkten der Umlaufbahn senkrecht zur Nadirrichtung. Die dargestellte Satellitenbahn entspricht der Bahn des Orbiters der Bepi Colombo Merkurmission, bei der der hier beschriebene Radiator zum Einsatz kommen soll.

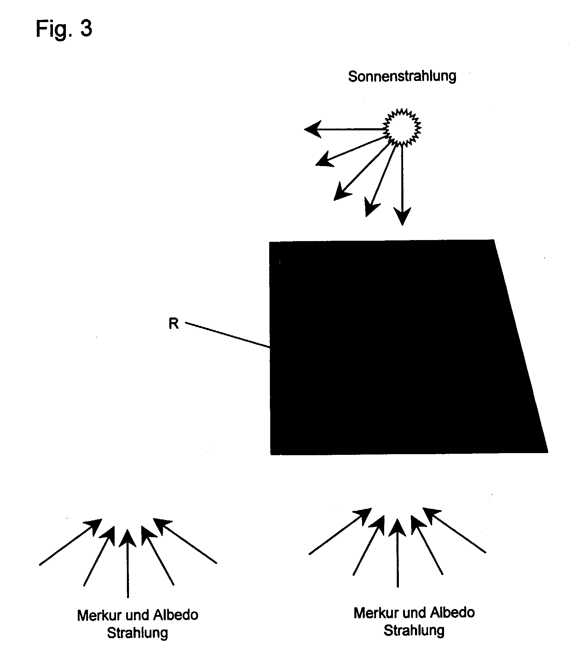

Eine Seite des Satelliten wird nie von der Sonne beschienen und kann als Radiator R (siehe Fig. 1,3) genutzt werden, auf den - bedingt durch den kleinen Sichtfaktor- nur eine recht schwache Albedo Strahlung, aber eine sehr hohe IR-Strahlung des Merkurs fällt. Der Merkur weist auf seiner Tagseite Oberflächentemperaturen zwischen 600 K im Apogäum und 700 K im Perigäum auf. Auf der Nachtseite liegt sie bei ca. 100 K. Die Temperatur auf der Tagseite bleibt im Sichtwinkel des Radiators (38° bis 59°) zwischen Subsolarpunkt und Horizont annähernd konstant. Dagegen ändert sich die Temperatur des Merkurs wesentlich mit dem Abstand des Merkurs von der Sonne während eines Umlaufs (Merkurjahr). Da sich der Merkur in ca. 59 Tagen nur einmal um seine eigene Achse dreht, ist die Temperaturverteilung auf Tag- und Nachtseite nahezu konstant. Ein Umlauf des Merkurs um die Sonne dauert 88 Erdtage.

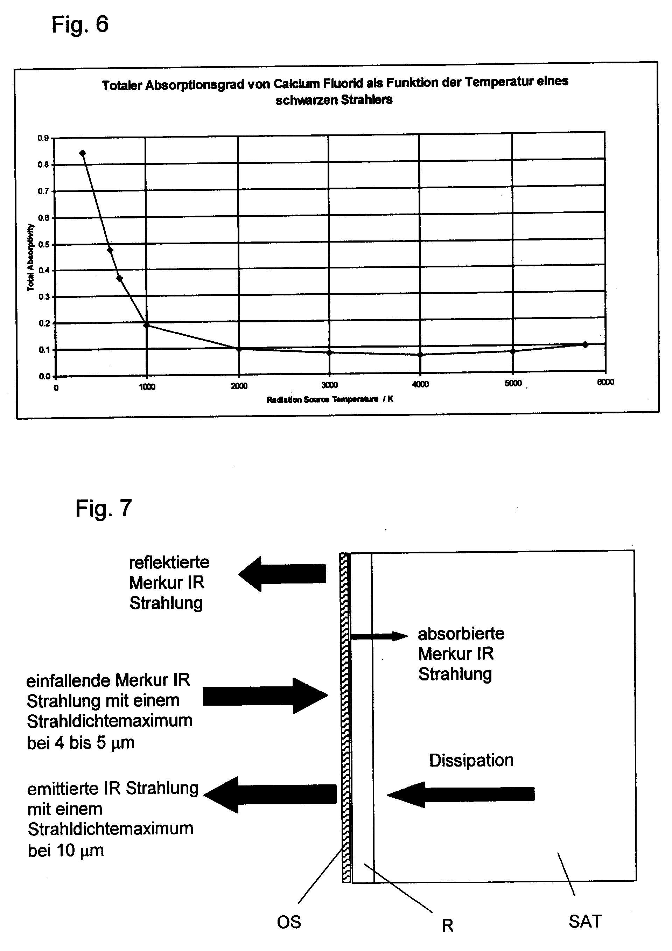

Wie in Fig. 7 schematisch dargestellt, wird erfindungsgemäß auf der glatten Außenfläche des Radiators R der optische Splitter aufgebracht. Optischer Splitter OS und Radiator R bilden vorteilhaft eine integrale Einheit.

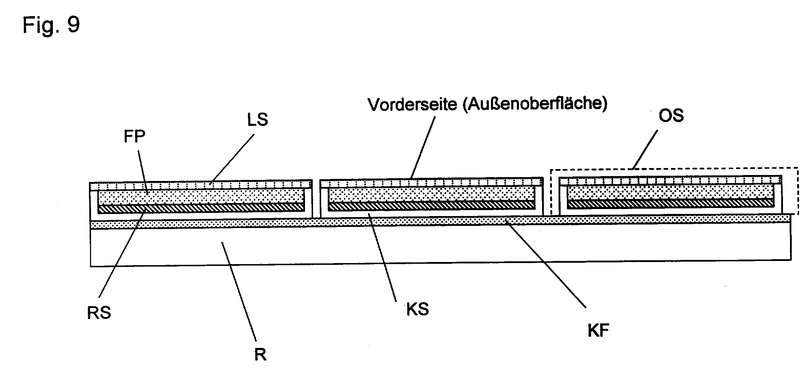

Fig. 9 zeigt den Aufbau eines optischen Splitters OS gemäß der Erfindung im Detail. Bei dieser Ausführung sind eine Vielzahl von optischen Splittern OS auf der Radiatoroberfläche nebeneinander angeordnet und decken so im Wesentlichen dessen gesamte Oberfläche ab. Das wellenlängenselektive Material eines optischen Splitters liegt in einer bevorzugten Ausführungsform als monokristallines, poliertes Calciumfluoridplättchen FP vor. Calciumfluorid hat glasähnliche, also sehr temperatur- und strahlungsbeständige Eigenschaften und lässt sich wie Optical Solar Reflectors (OSRs) befestigen. Die Plättchen FP haben eine typische Dicke von ca. 1 mm, und eine Größe von ca. 20 x 20 mm². Die Rückseite wird mit einer Reflexionsschicht RS aus Aluminium oder Silber durch Vakuumbedampfen oder Sputtern beschichtet. Als Korrosionsschutz dieser Reflexionsschicht RS dient eine weitere Schicht KS z.B. aus Nickel oder Inconel® oder dergleichen, die auf der Rückseite der Plättchen FP und an deren Rändern aufgebracht ist. Die Plättchen FP werden wie OSRs mit einem flexiblen Kleber, der auch als elektrisch leitender Kleber ausgebildet sein kann, aufgeklebt, um die unterschiedlichen Wärmeausdehungen des Radiatormaterials (i.a. Aluminium oder eine Sandwich-Struktur) und Calciumfluorid zu kompensieren. Beispielsweise werden die Plättchen mit einem Silikonkleber (Klebefilm KF in Fig. 9) auf die Außenfläche des Radiators R aufgeklebt. Alternativ können auch dünne Acryl-Klebefilme eingesetzt werden. Zusätzlich können Außenoberfläche und Ränder der Plättchen FP zur Vermeidung starker elektrostatischer Aufladungen mit einer schwach elektrisch leitenden Schicht LS, z.B. aus Zinnoxid oder Indium-Zinnoxid (ITO) beschichtet sein. Zwischen den Plättchen werden dabei bevorzugt abstände freigelassen von beispielsweise ca. 0,1 mm bis 0,5 mm, um eine ausreichende Flexibilität zum Ausgleich unterschiedlicher Wärmeausdehnung zu erzielen. Auch ermöglicht die Verwendung von Plättchen eine einfachere Anpassung der Radiatorbeschichtung an komplexere Radiatorstrukturen, z.B. ein Aufbringen von Plättchen um Inserts, Brackets oder bestimmte Montagepunkte für weitere Komponenten wie Antennen oder ähnliches.

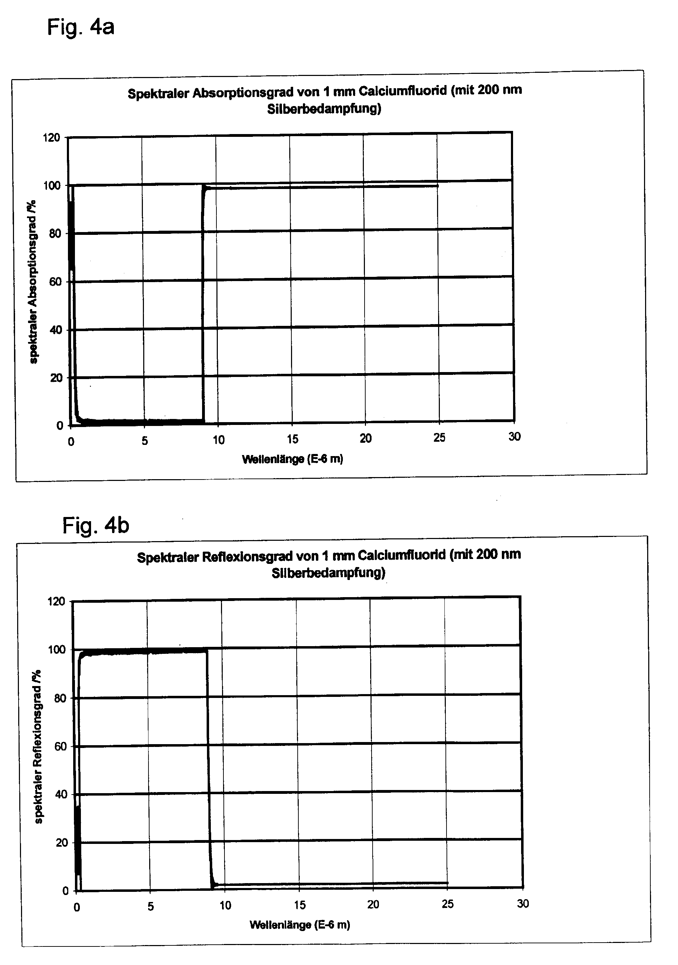

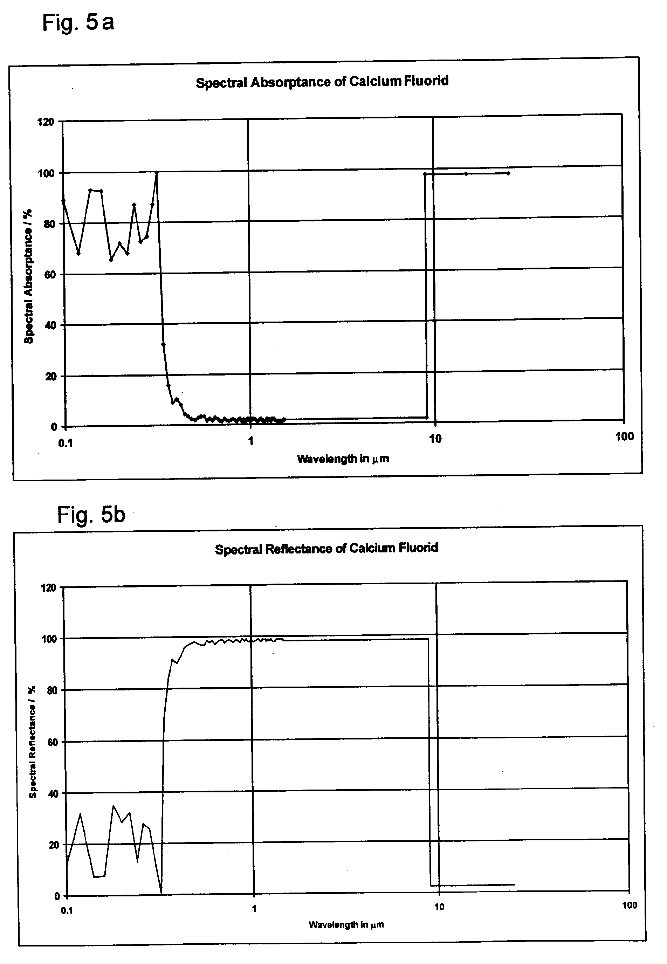

Beim optischen Splitter handelt es sich im Prinzip um einen invertierten OSR mit veränderten selektiven thermooptischen Eigenschaften. Der Calciumfluorid als wellenlängenselektives Material enthaltende optische Splitter zeichnet sich durch eine Trennwellenlänge bei ca. 9 µm aus. Fig. 4 und 5 zeigen die aus Simulationsrechnungen abgeleiteten spektralen Absorptions- und Reflexionsgrade von 1mm dickem Calciumfluorid mit rückseitiger Silberbedampfung. Man erkennt bei eine Wellenlänge von ca. 9 µm einen scharfen Übergang, bei der der Absorptionsgrad von ca. 0 auf annähernd 1 springt. Umgekehrt springt der Reflexionsgrad von ca. 1 auf einen Wert nahe 0.

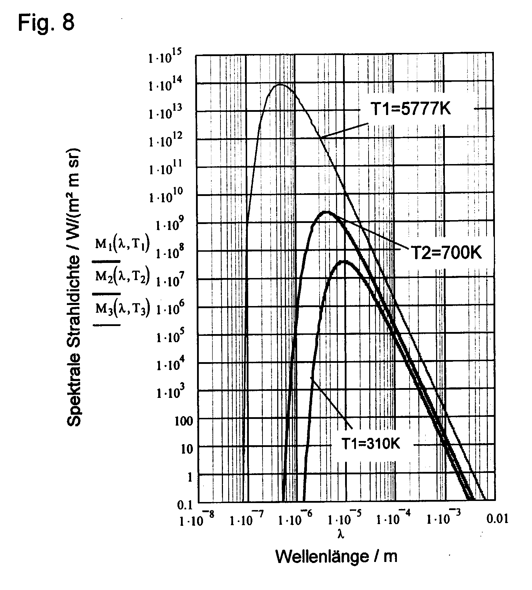

Die Merkurstrahlung weist ihr Strahlungsmaximum bei einer Wellenlänge von ca. 4 bis 5 µm auf, während die IR-Eigenstrahlung des Radiators R bei Temperaturen zwischen 0 und 40°C ihr Strahlungsmaximum bei etwa 10 µm hat. In Fig. 8 ist die spektrale Strahldichte eines schwarzen Körpers für die Temperaturen von Radiator (310K), Merkur (700K) und Sonne (5777K) eingezeichnet. Diesen Unterschied der Strahlungsmaxima macht sich der optische Splitter OS zu Nutze: Die ankommende Merkurstrahlung durchdringt die Calciumfluoridschicht des optischen Splitters OS und wird zum Großteil an der als Reflexionsschicht RS dienenden Silberschicht in den Weltraum zurück reflektiert, also nur schwach absorbiert (α_{IR} (700 K)<0,4). Auch Sonnenstrahlung mit einem Strahlungsmaximum bei 500 nm entsprechend der Strahlung eines schwarzen Körpers mit einer Oberflächentemperatur von ca. 5777 K wird nur schwach absorbiert (αₛ(5777 K) < 0,2), wodurch sich das wellenlängenselektive Element OS auch als Radiatormaterial für Satelliten im Erdorbit eignet.

Die Eigenstrahlung des Radiators wird mit einem hohen halbräumlichen Emissionsgrad (εₕ >0,8) von der Oberfläche des optischen Splitters an die Umgebung abgestrahlt.

In Fig. 7 sind zusammenfassend die an dem System Satellit, Radiator, optischer Splitter vorhandenen Wärmeströme und Strahlungswege eingezeichnet.

Die spektralen Absorptions- bzw. Reflexionsgrade in Fig. 4 und 5 und die Splitterfrequenz von etwa 9 µm decken sich vollständig mit den Anforderungen an einen Radiator für eine Merkurmission bei einer Massenbelegung von nur ca. 3,3 kg / m² einschließlich Kleber.

Damit lassen sich folgende thermo-optischen Eigenschaften erreichen (siehe auch Fig. 6):

| **Temperatur/K der einfallenden/emittierten** Strahlung eines schwarzen Strahlers | **Absorptions-grad α(T)** | **Bemerkung** |
|---|---|---|
| 310 | 0,84 | Radiator-lR-Eigenstrahlung |
| | | wobei gilt: α(T) = ε(T) |
| 700 | 0,37 | einfallende Merkur-IR- |
| | | Strahlung |
| 5777 | 0,10 | einfallende Sonnenstrahlung |

### Verzeichnis der verwendeten Abkürzungen und Bezugszeichen:

- FP: Plättchen aus wellenlängenselektivem Material
- KF: Klebefilm
- KS: Korrosionsschutzschicht (z.B. Nickel oder Inconel)
- LS: schwach elektrisch leitende Schicht (z.B. Zinnoxid oder Indium-Zinn-Oxid)
- OS: optischer Splitter
- RS: Reflexionsschicht
- hₐ: Bahnhöhe im Apogäum
- hₚ: Bahnhöhe im Perigäum
- IR: Infrarot
- OSR: Optical Solar Reflectors
- SSM: Second Surface Mirror
- rₘ: Radius des Merkur
- UV: Ultraviolett
- α: Absorptionsgrad (Materialeigenschaft)
- α _{IR}(700 K): IR-Absorptionsgrad des optischen Splitters bezogen auf das Strahlungsspektrum des Merkur (700 K)
- α ₛ(5777 K): solarer Absorptionsgrad des optischen Splitters bezogen auf das Strahlungsspektrum der Sonne (5777 K)
- ε ₕ: hemisphärischer IR-Emissionsgrad (Materialeigenschaft)
- ϕ_{M(t)}: Winkel zwischen Nadir-Richtung und Horizont des Merkur vom Satelliten aus gesehen
- ϕ_{Ma}: ϕ_{M} (Apogäum)
- ϕ_{Mp}: ϕ_{M}(Perigäum)

## Patentansprüche

1. Radiator (R) für einen Satelliten (SAT), **dadurch gekennzeichnet, dass** auf der Radiatoroberfläche ein wellenlängenselektives Element (OS) aufgebracht ist, das folgende Eigenschaften besitzt:
- einen hohen hemisphärischen Emissionsgrad;
- einen geringen Absorptionsgrad für IR-Strahlung eines schwarzen Strahlers mit einer Temperatur zwischen 500 K und 700 K;
- einen geringen solaren Absorptionsgrad.

2. Radiator nach Anspruch 1, **dadurch gekennzeichnet, dass** das wellenlängenselektive Element (OS) eine Trennwellenlänge aufweist, unterhalb derer die einfallende Strahlung im Wesentlichen reflektiert wird, und oberhalb derer Strahlung im Wesentlichen absorbiert wird.

3. Radiator nach Anspruch 1 oder 2, **dadurch gekennzeichnet, dass** das wellenlängenselektive Element (OS) eine Schicht aus wellenlängenselektivem Material in Form dünner Plättchen aufweist.

4. Radiator nach einem der Ansprüche 1 bis 3, **dadurch gekennzeichnet, dass** das wellenlängenselektive Element (OS) eine Schicht aus einem Fluorid, z.B. CaF₂, LaF₃, CeF₃ oder aus Al₂O₃ umfasst, welche auf ihrer Rückseite mit einer Reflexionsschicht, z.B. aus Aluminium oder Silber, versehen ist.

5. Radiator nach Anspruch 4, **dadurch gekennzeichnet, dass** die Fluoridschicht oder die Al₂O₃-Schicht in Form dünner Plättchen (FP) mit einer Dicke von 0,1 bis 10 mm, bevorzugt 1 mm vorliegt.

6. Radiator nach einem der vorangehenden Ansprüche, **dadurch gekennzeichnet, dass** die Außenoberfläche und/oder die Ränder der Fluoridschicht oder der Al₂O₃-Schicht zur Vermeidung starker elektrostatischer Aufladungen mit einer schwach elektrisch leitenden Schicht (LS), z.B. aus Zinnoxid, Indium-Zinnoxid, beschichtet ist.

7. Radiator nach einem der vorangehenden Ansprüche, **dadurch gekennzeichnet, dass** zum Schutz der Reflexionsschicht (RS) eine Korrosionsschutzschicht (KS) aus z.B. Nickel oder Inconel® auf der Rückseite der Reflexionsschicht (RS) und entlang ihrer Ränder vorhanden ist.

8. Radiator nach einem der vorangehenden Ansprüche, **dadurch gekennzeichnet, dass** das wellenlängenselektive Element (OS) und der Radiator (R) eine integrale Einheit bilden.

9. Radiator nach einem der vorangehenden Ansprüche, **dadurch gekennzeichnet, dass** das wellenlängenselektive Element (OS) mittels eines elektrisch leitenden Klebers (KF) mit dem Radiator (R) verbunden ist.

10. Verwendung eines Radiators (R) nach einem der vorangehenden Ansprüche an Bord eines Satelliten (SAT) in einem Orbit um einen sonnennahen Planeten, z.B. dem Merkur.
